# EUROPÄISCHE PATENTANMELDUNG

(11) **EP 3 263 260 A1**
(43) Veröffentlichungstag der Anmeldung: **03.01.2018**
(21) Anmeldenummer: 17177948.1
(22) Anmeldetag: 26.06.2017
(51) Int. Cl.: B23F 5/16, F16H 49/00, B23F 5/02, B23F 5/26, B23F 21/06, B23F 21/10, B23F 23/00, B23F 17/00

(54) **ZAHNRAD, VERFAHREN ZUM HERSTELLEN DER VERZAHNUNG EINES ZAHNRADES, SOWIE WERKZEUG ZUM HERSTELLEN DER VERZAHNUNG EINES ZAHNRADES**

(30) Priorität: 27.06.2016 LU 93121
(71) Anmelder: Ovalo GmbH, 65555 Limburg (DE)
(72) Erfinder:
(74) Vertreter: Grabovac, Dalibor

(57) **Zusammenfassung**

Die Erfindung betrifft ein Verfahren zum Herstellen der Verzahnung (1) eines Zahnrades (2), die x Zähne aufweist. Das Verfahren zeichnet sich dadurch aus, dass in einem ersten Bearbeitungsprozess eine Anzahl y, von äquidistant zueinander angeordneten ersten Zahnlücken der Verzahnung hergestellt wird, wobei gilt: x = n · y, wobei n eine natürliche Zahl größer 1 ist, und dass anschließend in n-1 zeitlich aufeinanderfolgenden weiteren Bearbeitungsprozessen jeweils in Tangentialrichtung um die Teilung der Verzahnung versetzt räumlich zwischen den ersten Zahnlücken jeweils y weitere Zahnlücken erzeugt werden.

## Beschreibung

Die Erfindung betrifft ein Verfahren zum Herstellen der Verzahnung eines Zahnrades, die x Zähne aufweist.

Die Erfindung betrifft außerdem ein Werkzeug zum Herstellen der Verzahnung eines Zahnrades oder zum Herstellen eines Zahnrades mit einem solchen Verfahren.

Die Erfindung betrifft außerdem ein Zahnrad, das mit einem solchen Verfahren oder mit einem solchen Werkzeug hergestellt ist.

Die Erfindung betrifft darüber hinaus ein Spannungswellengetriebe mit einem solchen Zahnrad, sowie ein Fahrzeug mit einem solchen Spannungswellengetriebe und einen Roboter mit einem solchen Spannungswellengetriebe.

Ein Spannungswellengetriebe besitzt zumeist ein starres, kreisförmiges innenverzahntes Zahnrad (Circularspline) und ein flexibles außenverzahntes Zahnrad (Flexspline), das im Inneren des starren innenverzahnten Zahnrads angeordnet ist. In dem außenverzahnten Zahnrad ist ein elliptischer Wellengenerator mittels eines Wälzlagers drehbar angeordnet, der das flexible außenverzahnte Zahnrad zu einer zumeist elliptischen Form verformt, um die Verzahnungen des innenverzahnten Zahnrades und des flexiblen außenverzahnten Zahnrades an jedem Ende der Ellipsen-Hauptachse miteinander in Eingriff zu bringen. Wenn der Wellengenerator gedreht wird, gelangen die Zähne des flexiblen außenverzahnten Zahnrades an gegenüberliegenden Seiten umlaufend in und außer Eingriff mit den Zähnen des starren innenverzahnten Zahnrades, wobei sich die Zähne des außenverzahnten Zahnrades fortlaufend radial um wenigstens ihre Zahnhöhe bewegen.

Insbesondere Spannungswellengetriebe werden zumeist einstufig mit hohem Untersetzungsverhältnis ausgebildet, wobei sich das Untersetzungsverhältnis i für einen Antrieb über den Wellengenerator und einen Abtrieb über den Circularspline bauartbedingt nach der Gleichung: i = z_{H} / (z_{I} - z_{H}) errechnet, wobei z_{I} die Anzahl der Zähne des innenverzahntes Zahnrades und z_{H} die Anzahl der Zähne des außenverzahnten Zahnrades ist. Dies bedeutet, dass das Untersetzungsverhältnis eine Funktion der Zähnezahlen ist und dass ein umso größeres Untersetzungsverhältnis erzielbar ist, je mehr Zähne auf den Teilkreisen des außenverzahnten Zahnrades und des innenverzahnten Zahnrades angeordnet werden können.

Durch den Zusammenhang Teilkreislänge = Zähnezahl · Zahnradteilung bzw. Teilkreisdurchmesser = Zähnezahl · Modul, müssen zum Erzielen eines höheren Untersetzungsverhältnisses Verzahnungen mit kleinerer Zahnradteilung hergestellt werden, wenn der Teilkreisdurchmesser unverändert bleiben soll. Allerdings ist das Herstellen von Zahnrädern, insbesondere von Zahnrädern für Spannungswellengetriebe, deren Verzahnung eine kleine Zahnradteilung aufweist, technisch sehr aufwändig.

Es gibt eine Vielzahl von Verfahren, um Zahnräder, insbesondere innen- oder außenverzahnte Zahnräder, herzustellen.

Beispielsweise ist das Herstellungsverfahren des Wälzschälens aus DE 243 514, DE 10 2008 037 514 A, DE 10 2005 049 528 A1 oder DE 10 2007 155 357 A1 bekannt. Das Wälzschälen ist eines von verschiedenen bekannten Verfahren zum Herstellen von Zahnrädern. Beim Wälzschälen wird die an einem Werkstück herzustellende Verzahnung mit einem Werkzeug-Zahnrad erzeugt, das Schneidkanten und eine zur herzustellenden Verzahnung komplementäre Verzahnung aufweist.

Hierzu werden das Werkstück und das Zahnrad an zueinander windschiefen Rotationsaxen positioniert und, insbesondere mit gleichsinniger Drehrichtung, synchron zueinander in Drehung versetzt. Die Schneidkanten des Werkzeug-Zahnrades führen hierbei aufgrund der windschiefen Stellung von Werkstück und Zahnrad in dem Werkstück eine Bewegung aus, die der Bewegung einer Baggerschaufel gleicht, wodurch die Verzahnung spanend hergestellt wird. Das rotierende Werkzeug-Zahnrad wird in einer bezogen auf das rotierende Werkstück axialen Vorschubrichtung relativ zu dem Werkstück bewegt, um die Verzahnung mittels der oben beschrieben Schneidbewegungen über die gewünschte Breite herzustellen. Allerdings ist es hierbei bereits äußerst problematisch, kleinmodulige Werkzeug-Zahnräder herzustellen. Die Herstellbarkeit kleinmoduliger Werkzeuge ist bisher fertigungstechnisch begrenzt. Beispielsweise sind einem Profilieren der Verzahnung mittels Schleifscheiben automatisch Grenzen gesetzt, weil die erforderlichen Schleifscheiben eine Mindestabmessung benötigen, um selbst ausreichend stabil zu sein, was mit der Anforderung eines kleinen Moduls kollidiert. Es müssen daher aufwändige Verfahren, wie beispielsweise Erodierverfahren und weitere Bearbeitungsverfahren eingesetzt werden, um kleinmodulige Werkzeug-Zahnräder in der erforderlichen Qualität zu fertigen.

Aus EP 2 839 914 A2 ist eine Zahnradbearbeitungsvorrichtung bekannt, bei der ein Bearbeitungswerkzeug und ein Werkstück mit einer hohen Geschwindigkeit synchron zueinander drehen, um ein hochgenaues Zahnrad durch Schneiden zu bearbeiten. Das Bearbeitungswerkzeug ist so hergestellt, dass jeder der Teilungen zwischen den Werkzeugschaufeln des Bearbeitungswerkzeugs ein ganzzahliges Vielfaches eines Abstandes zwischen den Zähnen des herzustellenden Zahnrades ist, wobei das ganzzahlige Vielfache gleich oder größer als das Doppelte ist. Es gibt jedoch Zahnräder, insbesondere innenverzahnte Zahnräder mit bestimmten Zähnezahlen, die sich mit der in dieser Druckschrift beschriebenen Herstellungsweise nicht herstellen lassen.

EP 2 745 970 A1 und aus EP 2 639 001 A1 offenbaren im Wesentlichen jeweils eine ähnliche Herstellungsweise mit denselben Nachteilen.

Aus EP 2 745 970 A1 ist eine Vorrichtung zum Verzahnen von Werkrädern durch Wälzschälen bekannt. Die Vorrichtung weist eine drehantreibbare Werkstückspindel zur Aufnahme des insbesondere innen zu verzahnenden Werkrades und eine drehantreibbare Werkzeugspindel, die ein Schneidzähne aufweisendes Schälrad trägt, auf. Der Abstand zumindest einiger gleichgestalteter Zähne des Schölrades entspricht einem Mehrfachen der regulären Zahnteilung eines regulären Schälrades, wobei das Schälrad eine ungerade Anzahl von Zähnen aufweist, wenn die Anzahl der Zähne des zu verzahnenden Werkstücks gerade ist und umgekehrt.

Aus EP 2 639 001 A1 ist Verfahren zur spanenden Bearbeitung eines Werkstücks bekannt, bei dem eine Stirnflächenverzahnung auf der Stirnfläche des Werkstücks erzeugt wird. Während des Wälzschälens wird hierbei ein Wälzschälwerkzeug mit einer Mehrzahl von umfangsseitig angeordneten länglichen Schneiden verwendet. Die Schneiden des Wälzschälwerkzeugs sind in Umfangsrichtung voneinander beabstandet, wobei die jeweiligen Abstände in Umfangsrichtung jeweils einem ganzzahligen Vielfachen einer Schneidenbreite entsprechen.

Es ist daher die Aufgabe der vorliegenden Erfindung, ein Verfahren anzugeben, mit dem auf einfache Weise, insbesondere innenverzahnte, Zahnräder mit beliebiger Zähnezahl, insbesondere Zahnräder für ein Spannungswellengetriebe, mit kleiner Zahnradteilung hergestellt werden können.

Die Aufgabe wird durch ein Verfahren gelöst, das dadurch gekennzeichnet ist, dass in einem ersten Bearbeitungsprozess eine Anzahl y, von äquidistant zueinander angeordneten ersten Zahnlücken der Verzahnung hergestellt wird, wobei gilt: x = n · y (n multipliziert mit y), wobei n eine natürliche Zahl größer 1 ist, und dass anschließend in n-1 zeitlich aufeinanderfolgenden weiteren Bearbeitungsprozessen , jeweils entlang dem Teilkreis um die Teilung der Verzahnung versetzt, räumlich zwischen den ersten Zahnlücken jeweils y weitere Zahnlücken erzeugt werden.

Hierbei gibt x Gesamtanzahl der Zähne der Verzahnung des herzustellenden Zahnrades an.

Es ist eine weitere Aufgabe der vorliegenden Erfindung, ein Werkzeug für das Herstellen von, insbesondere innenverzahnten, Zahnrädern mit beliebiger Zähnezahl, insbesondere von Zahnrädern für ein Spannungswellengetriebe, mit kleiner Zahnradteilung anzugeben.

Die weitere Aufgabe wird durch ein Werkzeug gelöst, das dadurch gekennzeichnet ist, dass das Werkzeug als Zahnrad ausgebildet ist und eine zur herzustellenden Verzahnung komplementäre Gegenverzahnung aufweist, wobei benachbarte Zähne der Gegenverzahnung auf dem Teilkreis jeweils um n·p (n multipliziert mit p) voneinander beabstandet sind, wobei n eine natürliche Zahl größer 1 ist und wobei p die Zahnradteilung der herzustellenden Verzahnung ist und wobei die Anzahl der Zähne der herzustellenden Verzahnung und die Anzahl der Zähne der Gegenverzahnung nicht teilerfremd sind oder wobei die Anzahl der Zähne der Gegenverzahnung des Werkzeugs ein ganzzahliger Bruchteil der die Anzahl der Zähne der herzustellenden Verzahnung ist.

Es ist eine weitere Aufgabe der vorliegenden Erfindung, ein Spannungswellengetriebe anzugeben, das bei kleiner Baugröße ein hohes Untersetzungsverhältnis aufweisen kann und das dennoch relativ einfach herstellbar ist.

Diese Aufgabe wird durch ein Spannungswellengetriebe gelöst, das wenigstens ein mit dem erfindungsgemäßen Verfahren und/oder mit dem erfindungsgemäßen Werkzeug hergestelltes Zahnrad beinhaltet.

Bei dem erfindungsgemäßen Verfahren werden nicht sämtliche Zähne der Verzahnung in einem einzigen Bearbeitungsprozess hergestellt. Stattdessen entstehen unterschiedliche Abschnitte der Verzahnung in sequenziell aufeinanderfolgenden Bearbeitungsprozessen. Dies ermöglicht es, ein Zahnrad unabhängig von dessen Zähnezahl herzustellen und das Werkzeug, das in den einzelnen Bearbeitungsprozessen verwendet wird, einfach auszubilden, so dass es insbesondere weniger aufwendig hergestellt werden kann. Insbesondere kann die Gegenverzahnung des Werkzeugs deutlich weiter voneinander beabstandete Zähne aufweisen.

Insbesondere kann vorteilhaft vorgesehen sein, dass die Anzahl der Zähne der Gegenverzahnung des Werkzeugs ein ganzzahliger Bruchteil der die Anzahl der Zähne der herzustellenden Verzahnung ist.

Beispielsweise wird beim konventionellen Wälzschälen üblicher Weise ein Werkzeug-Zahnrad verwendet, bei dem benachbarte Zähne entlang dem Teilkreis denselben Abstand zueinander aufweisen, wie die Zähne der herzustellenden Verzahnung. Hingegen kann das erfindungsgemäße Werkzeug, das ebenfalls als Zahnrad ausgebildet ist und eine zu herzustellenden Verzahnung komplementäre Gegenverzahnung aufweist, vorteilhaft eine geringere Anzahl von Zähnen aufweisen, so dass die vorhandenen Zähne entlang dem Teilkreis einen größeren Abstand zueinander aufweisen. Beispielsweise kann vorteilhaft vorgesehen sein, dass das Werkzeug-Zahnrad im Vergleich zu einem konventionell üblichen Werkzeug-Zahnrad lediglich den ersten, dritten, fünften, usw. Zahn aufweist und die dazwischenliegenden Zähne weggelassen sind. Auf diese Weise ist es vorteilhaft ermöglicht, das erfindungsgemäße Werkzeugzahnrad mit konventioneller Schleiftechnik herstellen zu können, weil der Zwischenraum zwischen den Zähnen des erfindungsgemäßen Werkzeug-Zahnrades auch mit relativ dicken Schleifscheiben erreicht werden kann.

Mit dem beispielhaft genannten Werkzeug-Zahnrad können in einem ersten Bearbeitungsprozess erste, äquidistant zueinander angeordnete Zahnlücken der Verzahnung hergestellt werden. Anschließend wird die Relativstellung des Zahnradrohlings relativ zu dem Werkzeug so verändert, dass in einem nachfolgenden, weiteren Bearbeitungsprozess die zwischen den ersten Zahnlücken herzustellenden weiteren Zahnlücken erzeugt werden können. Auf diese Weise wird in einem ersten Bearbeitungsprozess die erste Hälfte der Zahnlücken der herzustellenden Verzahnung hergestellt und danach, nachdem der Zahnradrohling relativ zu dem Werkzeug-Zahnrad um den x-ten Teil eines Vollkreises gedreht wurde, wobei x die Anzahl der Zähne der herzustellenden Verzahnung ist, die zweite Hälfte der Zahnlücken hergestellt.

Die Erfindung ist jedoch nicht darauf beschränkt, die herzustellende Verzahnung in zwei Bearbeitungsprozessen herzustellen. Vielmehr ist es auch möglich, drei oder mehr Bearbeitungsprozesse durchzuführen und jeweils nur den entsprechenden Bruchteil an Zahnlücken herzustellen.

Wie bereits erwähnt, kann die Erfindung beispielsweise in der Weise realisiert werden, dass das herzustellende Zahnrad durch Wälzschälen - jedoch mit einem erfindungsgemäßen Werkzeug - hergestellt wird. Insbesondere kann vorteilhaft vorgesehen sein, dass die Verzahnung durch Wälzschälen hergestellt wird, wobei jeder Zahn der Gegenverzahnung eine Schneidkante aufweist, um Material von dem Zahnrahrohling abzuschälen.

Allerdings ist die vorliegende Erfindung auch mit anderen spanenden Herstellungsverfahren, wie beispielsweise Hobeln, Wälzfräsen oder Wälzstoßen umsetzbar. Alternativ ist es beispielsweise auch möglich, die Verzahnung des Zahnrades durch Wälzschälschleifen herzustellen, wobei unter Wälzschälschleifen ein schleifendes Verfahren verstanden wird, bei dem bei ähnlicher Kinematik und bei ähnlicher Anordnung von Zahnradrohling und Werkzeug-Zahnrad wie beim Wälzschälen eine schleifende Bearbeitung mit einem Werkzeug-Zahnrad erfolgt, dessen Zähne anstelle von Schneidkanten eine abrasive Oberfläche aufweist, um Material von dem Zahnrahrohling abzuschleifen.

Es ist in vorteilhafter Weise auch möglich, die Verzahnung zunächst durch Wälzschälen in den einzelnen, zeitlich nacheinander erfolgenden Bearbeitungsprozessen in einem Rohzustand, insbesondere mit einem Aufmaß, zu erzeugen und anschließend durch Wälzschälschleifen, insbesondere unter Verwendung eines anderen erfindungsgemäßen Werkzeugs, nachzubearbeiten. Von ganz besonderem Vorteil ist eine Ausführung, bei der die Verzahnung zunächst durch Wälzschälen erzeugt wird und bei der die Verzahnung nach einem Härteprozess durch Wälzschälschleifen nachbearbeitet wird. Diese Ausführung ist besonders vorteilhaft, weil die beim Härten durch Verziehen des Materials auftretenden Maßabweichungen durch das nachfolgende Wälzschälschleifen korrigiert werden können.

Auch das Wälzschälschleifen erfolgt vorzugsweise in mehreren zeitlich aufeinander folgenden Bearbeitungsprozessen, wobei jeweils unterschiedliche Zahnlücken bearbeitet werden. Insbesondere kann vorteilhaft vorgesehen sein, dass die Verzahnung durch Wälzschälen zunächst erzeugt wird und anschließend durch Wälzschälschleifen in zeitlich nacheinander erfolgenden Bearbeitungsprozessen, bei denen jeweils nur ein Teil der Verzahnung geschliffen wird, nachbearbeitet wird. Hierbei kann vorteilhaft insbesondere vorgesehen sein, dass in einem ersten Schleifprozess die Zahnflanken einer Anzahl y, von äquidistant zueinander angeordneten ersten Zahnlücken der Verzahnung geschliffen wird, wobei gilt: x = n · y, wobei n eine natürliche Zahl größer 1 ist, und dass anschließend in n-1 zeitlich aufeinanderfolgenden weiteren Schleifprozessen die Zahnflanken von räumlich zwischen den ersten Zahnlücken angeordneten weiteren Zahnlücken geschliffen werden.

Insbesondere zur Realisierung einer Herstellung im Wälzschälverfahren oder im Wälzschälschleifverfahren kann vorgesehen sein, dass der erste Bearbeitungsprozess beinhaltet, einen Zahnradrohling in Rotation um eine erste Rotationsachse zu versetzen und darüber hinaus beinhaltet, ein Werkzeug, das eine Werkzeugverzahnung aufweist, in eine zur Rotation des Zahnradrohlings synchrone Rotation um eine zweite Rotationsachse zu bringen, wobei die erste Rotationsachse und die zweite Rotationsachse zueinander windschief sind und wobei das Werkzeug Material von dem Zahnradrohling abträgt und wobei die äquidistant zueinander angeordneten ersten Zahnlücken der Verzahnung hergestellt werden. Darüber hinaus kann vorteilhaft vorgesehen sein, dass in einem weiteren Bearbeitungsprozess zunächst die Relativdrehstellung des Zahnradrohlings zu dem Werkzeug verändert wird und anschließend sowohl der Zahnradrohling, als auch das Werkzeug wieder synchron rotiert werden. Dieser Vorgang wird solange wiederholt, bis sämtliche x-Zähne der Verzahnung hergestellt sind. Nur der Vollständigkeit halber sei erläutert, dass die Rotationsachsen zueinander windschief sind, wenn sie sich weder schneiden, noch parallel zueinander sind oder wenn es keine Ebene gibt, in der beide Rotationsachsen angeordnet sind.

In vorteilhafter Weise kann vorgesehen sein, dass der Zahnradrohling zum Verändern der Relativdrehstellung jeweils um den x-ten Teil eines Vollkreises um die erste Achse gedreht wird, ohne dass dabei die Drehstellung oder die Relativausrichtung des Werkzeuges oder die Position des Werkzeuges verändert wird, wobei x die Anzahl der Zähne der herzustellenden Verzahnung ist.

In vorteilhafter Weise kann alternativ vorgesehen sein, dass das Werkzeug zum Verändern der Relativdrehstellung jeweils um den x-ten Teil eines Vollkreises um die zweite Achse gedreht wird, ohne dass dabei die Drehstellung oder die Relativausrichtung des Zahnradrohlings oder die Position des Zahnradrohlings verändert wird, wobei x die Anzahl der Zähne der herzustellenden Verzahnung ist.

Es ist auch möglich, die die Relativposition von Werkzeug und Zahnradrohling zum Verändern der Relativdrehstellung verändert wird.

Insbesondere zur Herstellung eines innenverzahnten Zahnrades ist es besonders vorteilhaft, wenn der Außendurchmesser des Werkzeugzahnrades kleiner ist, als der Innendurchmesser des Zahnradrohlings und/oder wenn der Teilkreisdurchmesser des Werkzeugzahnrades kleiner ist, als der Teilkreisdurchmesser des Zahnradrohlings.

Bei einer besonderen Ausführung ist zur Realisierung der erforderlichen Synchronität der Rotation von Zahnradrohling und Werkzeugzahnrad vorgesehen, dass das Verhältnis der Drehzahlen von Zahnradrohling und Werkzeugzahnrad dem Verhältnis der Teilkreisdurchmesser von Werkzeugzahnrad und Zahnradrohling entspricht, so dass gilt Uz/Uw = Dw/Dz, wobei Uz die Drehzahl des Zahnradrohlings, Uw die Drehzahl des Werkzeugzahnrades, Dw der Durchmesser des Werkzeugzahnrades und Dz der Durchmesser des Zahnradrohlings ist.

Insbesondere kann vorteilhaft vorgesehen sein, dass bei den unterschiedlichen Bearbeitungsprozessen jeweils eine unterschiedliche Gruppe von Zahnlücken bearbeitet wird, wobei es darüber hinaus vorzugsweise so ist, dass der jeweils bereits hergestellte Teil der Zahnlücken der bei einem Bearbeitungsprozess gerade in Bearbeitung befindlichen Gruppe mit den Zähnen der Gegenverzahnung während der Rotation des Zahnradrohlings und Werkzeugzahnrades miteinander kämmen.

Ganz allgemein kann vorteilhaft vorgesehen sein, dass die radialen Mittellinien benachbarter erster Zahnlücken auf dem Teilkreis jeweils um n·p voneinander beabstandet sind, wobei p die Zahnradteilung der herzustellenden Verzahnung und n die Anzahl der vorgesehenen Bearbeitungsprozesse ist, um die Verzahnung vollständig herzustellen. Beispielsweise können bei die radialen Mittellinien benachbarter erster Zahnlücken auf dem Teilkreis jeweils um 3·p voneinander beabstandet sein, wenn die Verzahnung insgesamt in drei Prozessschritten hergestellt werden soll, wobei p die Zahnradteilung der herzustellenden Verzahnung ist.

Unter der Zahnradteilung wird die Länge des Bogens auf dem Teilkreis zwischen zwei benachbarten gleichnamigen Zahnflanken (Rechts- oder Linksflanken) verstanden. Besonders vorteilhaft ist es, wenn die Anzahl der vorzunehmenden Bearbeitungsprozesse N2 oder N3 beträgt. Es ist jedoch auch möglich, das Verfahren mit einer höheren Anzahl von Bearbeitungsprozessen auszuführen und dass erfindungsgemäße Werkzeug entsprechend auszulegen.

Wie bereits erwähnt kann vorteilhaft vorgesehen sein, dass das erfindungsgemäße Werkzeug als Werkzeugrad zum Wälzschälen ausgebildet ist und/oder dass die Zähne des Werkzeugs Schneidkanten aufweisen. Insbesondere kann vorteilhaft vorgesehen sein, dass das erfindungsgemäße Werkzeug wie ein konventionelles Werkrad zum Wälzschälen ausgebildet ist, bei dem jedoch die Zähne zwischen einer Auswahl Zähnen, die um n·p voneinander beabstandet sind, weggelassen sind, wobei n eine natürliche Zahl größer 1 ist und vorzugsweise die Anzahl von Bearbeitungsprozessen angibt, die gemäß dem erfindungsgemäßen Verfahren zum Herstellen einer vollständigen Verzahnung des Zahnrades erforderlich sind.

Es ist alternativ auch möglich, dass das Werkzeug als Werkrad zum Wälzschälschleifen ausgebildet ist und/oder dass die Zähne des Werkzeugs eine abrasive Oberfläche aufweisen.

Vorzugsweise ist der Raum zwischen benachbarten Zähnen des Werkzeugs ein Freiraum. Dieser Freiraum kann vorteilhaft insbesondere in konventioneller Schleiftechnik hergestellt und bearbeitet werden. Obwohl das Werkzeug, wie oben ausführlich beschrieben, dazu ausgebildet sein kann, sehr kleinmodulige Verzahnungen herzustellen, kann es selber auf diese Weise unaufwändig und vergleichsweise kostengünstig hergestellt werden. Dies insbesondere mit Schleifscheiben, deren axiale Abmessung deutlich größer ist, als die Zahnbreite der herzustellenden Verzahnung.

Vorzugsweise weisen die Zähne der Gegenverzahnung des Werkzeugs, insbesondere abgesehen von etwaig vorhandenen Schneidkanten und/oder insbesondere wenigstens in einer zur Axialrichtung senkrechten Querschnittsebene, dieselbe Form und/oder dieselbe Größe auf, wie die Zähne der herzustellenden Verzahnung.

In vorteilhafter Weise kann vorgesehen sein, dass die Gegenverzahnung, zumindest abschnittweise, insbesondere vollständig, eine Evolventenverzahnung ist und/der zur Herstellung einer zumindest abschnittweisen, insbesondere vollständigen, Evolventenverzahnung ausgebildet ist.

Von ganz besonderem Vorteil ist ein Zahnrad, das nach dem erfindungsgemäßen Verfahren und/oder unter Verwendung eines erfindungsgemäßen Werkzeugs hergestellt ist. Die Erfindung ermöglicht es in vorteilhafter Weise, ein solches Zahnrad bei vergleichsweise niedrigem Aufwand, insbesondere kostengünstig, und bei hoher Qualität und Maßgenauigkeit herzustellen.

Insbesondere kann das mit dem erfindungsgemäßen Verfahren und/oder unter Verwendung eines erfindungsgemäßen Werkzeugs hergestellte Zahnrad ein Modul (Modul = Zahnradteilung dividiert durch π) aufweisen, der kleiner als 0,5 mm ist oder der insbesondere sogar kleiner als 0,25 mm ist oder der kleiner als 0,15 mm ist.

In ganz besonders vorteilhafter Weise kann es sich bei dem Zahnrad um ein Hohlrad mit einer Innenverzahnung, beispielsweise für ein Spannungswellengetriebe, handeln.

Ganz allgemein kann das Zahnrad vorteilhaft als Circular-Spline oder als Dynamic-Spline oder als Flexspline für ein Spannungswellengetriebe ausgebildet sein. Alternativ ist es auch möglich, dass das Zahnrad als Teil eines Circular-Spline oder als Teil eines Dynamic-Spline oder als Teil eins Flexspline für ein Spannungswellengetriebe ausgebildet ist.

Ein Spannungswellengetriebe, das mit wenigstens einem Zahnrad ausgerüstet ist, welches nach dem erfindungsgemäßen Verfahren und/oder unter Verwendung des erfindungsgemäßen Werkzeugs hergestellt ist, hat neben einer vergleichsweise sehr kostengünstigen Herstellbarkeit den ganz besonderen Vorteil, dass es ein im Verhältnis zu seiner Baugröße großes Untersetzungsverhältnis aufweisen kann. Derartige Spannungswellengetriebe können vorteilhaft beispielsweise in Robotern, insbesondere in gelenkigen Verbindungen der Roboterarme, eingesetzt werden. Von besonderem Vorteil ist auch der Einsatz derartiger Spannungswellengetriebe in einem Fahrzeug, insbesondere in einem Kraftfahrzeug. Besonders vorteilhaft ist die Verwendung derartiger Spannungswellengetriebe in Stellaktuatoren eines Kraftfahrzeugs, beispielsweise in einem aktiven Fahrwerk, einer Überlagerungs- und/oder Servolenkung, einem Nockenwellenversteller, in einem Versteller zum Verstellen des Expansionshubes eines Verbrennungsmotors oder einem Bremssystem, insbesondere einer Feststellbremse.

Von ganz besonderem Vorteil ist eine Vorrichtung, beispielsweise zum Wälzschälen oder zum Wälzschälschleifen, in der ein Zahnradrohling festlegbar und um eine erste Achse rotierbar ist und in der ein Werkzeug nach einem der Ansprüche 10 bis 14 festlegbar und um eine zweite Achse rotierbar ist und bei der die Relativdrehstellung des Zahnradrohlings zu dem Werkzeug bei angehaltener Rotation veränderbar ist, ohne die Festlegung des Werkzeugs und ohne die Festlegung des Zahnradrohlings zu lösen. Dies kann beispielsweise derart realisiert sein, dass das Werkzeug nach dem Anhalten der Rotation relativ zu dem Zahnradrohling verschoben wird, so dass der bereits hergestellte Teil der Verzahnung und die Gegenverzahnung außer Eingriff gelangen, dass anschließen die Relativdrehstellung geändert wird und danach das Werkzeug zurück in die Bearbeitungsposition verschoben wird. Natürlich ist es umgekehrt auch möglich, statt dem Werkzeug den Zahnradrohling zu verschieben oder beide Teile gleichzeitig zu verschieben. Insbesondere kann vorteilhaft vorgesehen sein, dass die zum Bewirken einer Veränderung der Relativdrehstellung erforderlichen Schritte automatisch, insbesondere von der Vorrichtung automatisch gesteuert, ablaufen.

Auf diese Weise ist es vorteilhaft vermieden, das Werkzeug und/oder den Zahnradrohling zwischen den Bearbeitungsprozessen ausspannen und in einer geänderten Drehstellung wieder einspannen zu müssen.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: schematisch das Herstellen der Verzahnung eines Zahnrades im Wälzschälverfahren nach dem Stand der Technik, und
- Fig. 2: ein Ausführungsbeispiel des erfindungsgemäßen Verfahrens.

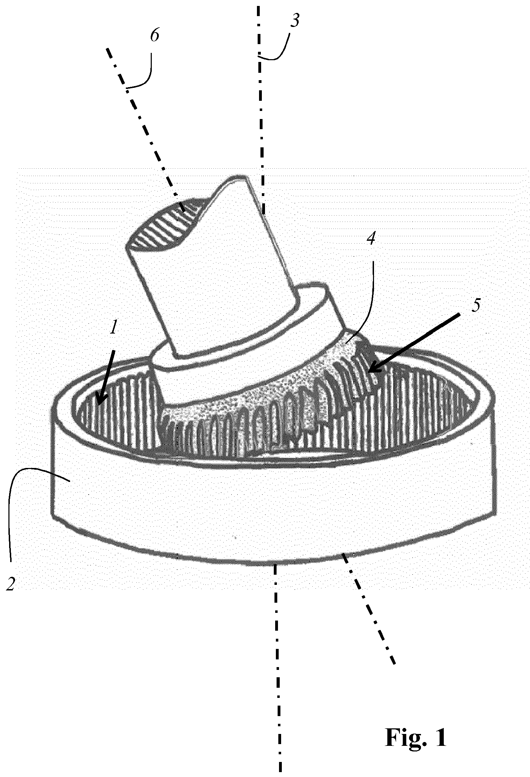

Fig. 1 illustriert schematisch das Herstellen der Verzahnung 1 eines Zahnrades 2 aus einem Zahnradrohling im Wälzschälverfahren nach dem Stand der Technik. Der Zahnradrohling, der zu Beginn keine Zähne aufweist, rotiert um eine erste Rotationsachse 3, während ein Werkzeug-Zahnrad 4, das eine zur herzustellenden Verzahnung komplementäre Gegenverzahnung 5 aufweist, synchron zur Rotation des Zahnradrohlings um eine zweite Rotationsachse 6 rotiert, wobei die erste Rotationsachse 3 und die zweite Rotationsachse 6 zueinander windschief sind, und wobei sich das Werkzeug-Zahnrad 4 parallel zur ersten Rotationsachse 3 bewegt, während der jeweils bereits hergestellte Teil der Verzahnung 1 des rotierenden Zahnradrohlings und die Gegenverzahnung 5 des rotierenden Schleifwerkzeuges 4 der miteinander kämmen.

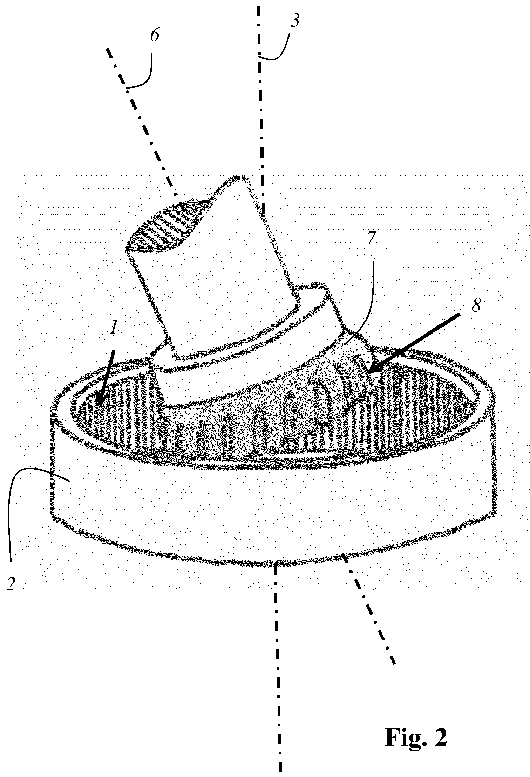

Fig. 2 illustriert ein Ausführungsbeispiel in Bezug auf das erfindungsgemäße Verfahren zum Herstellen der Verzahnung 1 eines Zahnrades 2. Bei diesem Ausführungsbeispiel weist die Gegenverzahnung 8 des erfindungsgemäßen Werkzeug-Zahnrades 7 - im Vergleich zu dem in Fig. 1 dargestellten Werkzeug-Zahnrad 4 nach dem Stand der Technik - nur die halbe Anzahl von Zähnen auf. Die Verzahnung 1 des Zahnrades 2 wurde in zwei zeitlich aufeinanderfolgenden Bearbeitungsprozessen hergestellt, wobei in einem ersten Bearbeitungsprozess zunächst erste Zahnlücken durch Wälzschälen hergestellt wurden und anschließend der Zahnradrohling, dessen Verzahnung im Ergebnis x Zähne aufweisen soll, um den x-ten Teil eines Vollkreises um die Rotationsachse 3 gedreht wurde, während die Drehstellung des Werkzeug-Zahnrades 7 unverändert geblieben ist, um in einem zweiten Bearbeitungsprozess zwischen den ersten Zahnlücken weitere Zahnlücken und damit die vollständige Verzahnung herzustellen.

### Bezugszeichenliste:

- 1: Herzustellende Verzahnung
- 2: Zahnrad
- 3: Erste Rotationsachse
- 4: Werkzeugzahnrad (Stand der Technik)
- 5: Gegenverzahnung des Werkzeugzahnrades 4
- 6: Zweite Rotationsachse
- 7: Ausführungsbeispiel eines erfindungsgemäßen Werkzeugzahnrades
- 8: Gegenverzahnung des Werkzeugzahnrades 7

## Patentansprüche

1. Verfahren zum Herstellen der Verzahnung eines Zahnrades, die x Zähne aufweist, **dadurch gekennzeichnet, dass** in einem ersten Bearbeitungsprozess eine Anzahl y, von äquidistant zueinander angeordneten ersten Zahnlücken der Verzahnung hergestellt wird, wobei gilt: x = n · y, wobei n eine natürliche Zahl größer 1 ist, und dass anschließend in n-1 zeitlich aufeinanderfolgenden weiteren Bearbeitungsprozessen, jeweils entlang dem Teilkreis um die Teilung der Verzahnung versetzt, räumlich zwischen den ersten Zahnlücken jeweils y weitere Zahnlücken erzeugt werden.

2. Verfahren nach Anspruch 1, **dadurch gekennzeichnet, dass**
a. die Verzahnung durch Wälzschälen hergestellt wird oder dass
b. die Verzahnung durch Wälzschälen hergestellt wird, wobei jeder Zahn der Gegenverzahnung eine Schneidkante aufweist, um Material von dem Zahnrahrohling abzuschälen, oder dass
c. die Verzahnung durch Wälzschälschleifen hergestellt wird, oder dass
d. die Verzahnung durch Wälzschälschleifen hergestellt wird, wobei jeder Zahn der Gegenverzahnung eine abrasive Oberfläche aufweist, um Material von dem Zahnrahrohling abzuschleifen, oder dass
e. die Verzahnung durch Wälzschälen zunächst erzeugt wird und anschließend durch Wälzschälschleifen nachbearbeitet wird, oder dass
f. die Verzahnung durch Wälzschälen zunächst erzeugt wird und anschließend gehärtet und dann anschließend durch Wälzschälschleifen nachbearbeitet wird, oder dass
g. die Verzahnung durch Wälzschälen zunächst erzeugt wird und anschließend durch Wälzschälschleifen nachbearbeitet wird, wobei in einem ersten Schleifprozess die Zahnflanken einer Anzahl y, von äquidistant zueinander angeordneten ersten Zahnlücken der Verzahnung geschliffen wird, wobei gilt: x = n · y, wobei n eine natürliche Zahl größer 1 ist, und dass anschließend in n-1 zeitlich aufeinanderfolgenden weiteren Schleifprozessen die Zahnflanken von räumlich zwischen den ersten Zahnlücken angeordneten weiteren Zahnlücken geschliffen werden.

3. Verfahren nach Anspruch 1 oder 2, **dadurch gekennzeichnet, dass** der erste Bearbeitungsprozess beinhaltet:
a. Versetzen eines Zahnradrohlings in Rotation um eine erste Rotationsachse,
b. Versetzen eines Werkzeuges, das eine zur herzustellenden Verzahnung komplementäre Gegenverzahnung aufweist, in eine zur Rotation des Zahnradrohlings synchrone Rotation um eine zweite Rotationsachse, wobei
i. die erste Rotationsachse und die zweite Rotationsachse zueinander windschief sind und wobei
ii. das Werkzeug Material von dem Zahnradrohling abträgt und wobei
iii. die äquidistant zueinander angeordneten ersten Zahnlücken der Verzahnung hergestellt werden.

4. Verfahren nach Anspruch 3, **dadurch gekennzeichnet, dass**
a. das Verhältnis der Drehzahlen von Zahnradrohling und Werkzeugzahnrad dem Verhältnis der Teilkreisdurchmesser von Werkzeugzahnrad und Zahnradrohling entspricht, und/oder dass
b. der jeweils bereits hergestellte Teil der Verzahnung und die Gegenverzahnung während der Rotation des Zahnradrohlings und Werkzeugzahnrades miteinander kämmen.

5. Verfahren nach Anspruch 3 oder 4, **dadurch gekennzeichnet, dass**
a. ein weiterer Bearbeitungsprozess beinhaltet, dass die Relativdrehstellung des Zahnradrohlings zu dem Werkzeug bei angehaltener Rotation verändert wird und durch anschließendes Wiederholen der Schritte gemäß den Ansprüchen 3a und 3b räumlich zwischen den ersten Zahnlücken y weitere Zahnlücken erzeugt werden, oder dass
b. ein weiterer Bearbeitungsprozess beinhaltet, dass die Relativdrehstellung des Zahnradrohlings zu dem Werkzeug bei angehaltener Rotation verändert wird und durch anschließendes Wiederholen der Schritte gemäß den Ansprüchen 3a und 3b räumlich zwischen den ersten Zahnlücken die jeweils y weiteren Zahnlücken erzeugt werden und dieser Bearbeitungsprozess wiederholt wird, bis sämtliche x Zähne der Verzahnung hergestellt sind.

6. Verfahren nach Anspruch 5, **dadurch gekennzeichnet, dass**
a. der Zahnradrohling zum Verändern der Relativdrehstellung um den x-ten Teil eines Vollkreises um die erste Achse gedreht wird, ohne dabei die Drehstellung des Werkzeugs zu verändern und ohne dabei die Position und Ausrichtung des Werkzeugs zu verändern, oder dass
b. das Werkzeug zum Verändern der Relativdrehstellung um den x-ten Teil eines Vollkreises um die zweite Achse gedreht wird, ohne dabei die Drehstellung des Zahnradrohlings zu verändern und ohne dabei die Position und Ausrichtung des Zahnradrohlings zu verändern.

7. Verfahren nach einem der Ansprüche 1 bis 6, **dadurch gekennzeichnet, dass**
a. die radialen Mittenlinien benachbarter erster Zahnlücken auf dem Teilkreis jeweils um n·p voneinander beabstandet sind, wobei p die Zahnradteilung der herzustellenden Verzahnung ist, und/oder dass
b. gilt: n = 2 oder n = 3, und/oder dass
c. die Verzahnung eine Evolventenverzahnung ist, und/oder dass
d. die Verzahnung wenigstens einen evolventischen Abschnitt aufweist, und/oder dass
e. die Verzahnung eine Innenverzahnung ist.

8. Verfahren nach einem der Ansprüche 1 bis 7, **dadurch gekennzeichnet, dass**
a. zum Herstellen der Verzahnung ein Werkzeug verwendet wird, das als Zahnrad ausgebildet ist und eine zur herzustellenden Verzahnung komplementäre Gegenverzahnung aufweist, wobei benachbarte Zähne der Gegenverzahnung auf dem Teilkreis jeweils um n·p voneinander beabstandet sind, wobei n eine natürliche Zahl größer 1 ist und wobei p die Zahnradteilung der herzustellenden Verzahnung ist, oder dass
b. zum Herstellen der Verzahnung ein Werkzeug verwendet wird, das als Zahnrad ausgebildet ist und eine zur herzustellenden Verzahnung komplementäre Gegenverzahnung aufweist, wobei benachbarte Zähne der Gegenverzahnung auf dem Teilkreis jeweils um n·p voneinander beabstandet sind, wobei n eine natürliche Zahl größer 1 ist und wobei p die Zahnradteilung der herzustellenden Verzahnung ist, wobei die Anzahl der Zähne der herzustellenden Verzahnung und die Anzahl der Zähne der Gegenverzahnung nicht teilerfremd sind oder wobei die Anzahl der Zähne der Gegenverzahnung des Werkzeugs ein ganzzahliger Bruchteil der die Anzahl der Zähne der herzustellenden Verzahnung ist.

9. Werkzeug zum Herstellen der Verzahnung eines Zahnrades mittels eines Verfahrens nach einem der Ansprüche 1 bis 8 oder zum Herstellen eines Zahnrades mittels eines Verfahrens nach einem der Ansprüche 1 bis 8, **dadurch gekennzeichnet, dass** das Werkzeug als Zahnrad ausgebildet ist und eine zur herzustellenden Verzahnung komplementäre Gegenverzahnung aufweist, wobei benachbarte Zähne der Gegenverzahnung auf dem Teilkreis jeweils um n·p voneinander beabstandet sind, wobei n eine natürliche Zahl größer 1 ist und wobei p die Zahnradteilung der herzustellenden Verzahnung ist und wobei die Anzahl der Zähne der herzustellenden Verzahnung und die Anzahl der Zähne der Gegenverzahnung nicht teilerfremd sind oder wobei die Anzahl der Zähne der Gegenverzahnung des Werkzeugs ein ganzzahliger Bruchteil der die Anzahl der Zähne der herzustellenden Verzahnung ist.

10. Werkzeug nach Anspruch 9, **dadurch gekennzeichnet, dass**
a. das Werkzeug als Werkrad zum Wälzschälen ausgebildet ist und/oder dass die Zähne des Werkzeugs Schneidkanten aufweisen, und/oder dass das Werkzeug wie ein konventionelles Werkrad zum Wälzschälen ausgebildet ist, bei dem jedoch die Zähne zwischen einer Auswahl von um n·p beabstandeten Zähnen weggelassen sind, wobei n eine natürlich Zahl größer 1 ist, oder dass
b. das Werkzeug als Werkrad zum Wälzschälschleifen ausgebildet ist und/oder dass die Zähne des Werkzeugs eine abrasive Oberfläche aufweisen.

11. Zahnrad, das mit einem Verfahren nach einem der Ansprüche 1 bis 8 hergestellt ist und/oder das unter Verwendung eines Werkzeugs nach Anspruch 9 oder 10 hergestellt ist.

12. Zahnrad nach Anspruch 11, **dadurch gekennzeichnet, dass**
a. die Verzahnung ein Modul aufweist, das kleiner als 0,5 mm ist oder das kleiner als 0,25 mm ist oder das kleiner als 0,15 mm ist, und/oder dass
b. die Verzahnung eine Innenverzahnung ist, und/oder dass
c. das Zahnrad als Circularspline oder als Dynamicspline oder als Flexspline für ein Spannungswellengetriebe ausgebildet ist, oder dass
d. das Zahnrad als Teil eines Circularspline oder als Teil eines Dynamicspline oder als Teil eines Flexspline für ein Spannungswellengetriebe ausgebildet ist.

13. Spannungswellengetriebe, das wenigstens ein Zahnrad nach Anspruch 11 oder 12 beinhaltet.

14. Roboter, der wenigstens ein Zahnrad nach Anspruch 11 oder 12 oder ein Spannungswellengetriebe nach Anspruch 13 aufweist, oder Fahrzeug, insbesondere Kraftfahrzeug, das wenigstens ein Zahnrad nach Anspruch 11 oder 12 oder ein Spannungswellengetriebe nach Anspruch 13 aufweist.

15. Vorrichtung, in der ein Zahnradrohling festlegbar und um eine erste Achse rotierbar ist und in der ein Werkzeug nach Anspruch 9 oder 10 festlegbar und um eine zweite Achse rotierbar ist, **dadurch gekennzeichnet, dass** die Relativdrehstellung des Zahnradrohlings zu dem Werkzeug bei angehaltener Rotation veränderbar ist, ohne die Festlegung des Werkzeugs und ohne die Festlegung des Zahnradrohlings zu lösen.
